# EUROPÄISCHE PATENTANMELDUNG

(11) **EP 4 567 305 A2**
(43) Veröffentlichungstag der Anmeldung: **11.06.2025**
(21) Anmeldenummer: 25172507.3
(22) Anmeldetag: 30.06.2016
(51) Int. Cl.: F16J 10/04, F02F 1/16

(54) **ZYLINDERLAUFBUCHSE FÜR EINE BRENNKRAFTMASCHINE**

(30) Priorität: 03.07.2015 AT 4302015
(62) Teilanmeldung aus: 16740948.1
(71) Anmelder: Innio Jenbacher GmbH & Co OG, 6200 Jenbach (AT)
(72) Erfinder: BECKER, Florian, 6232 Münster (AT); SZAFRANSKI, Tomasz, 01-494 Warsaw (PL); KOROTKO, Jakub, 05-400 Otwock (PL); KANIECKI, Radoslaw, 06-100 Pultsk (PL)
(74) Vertreter: Torggler & Hofmann Patentanwälte - Innsbruck

(57) **Zusammenfassung**

Zylinderlaufbuchse (1) für eine Brennkraftmaschine , mit einem Bund (2), wobei die Zylinderlaufbuchse (1) an ihrer Mantelfläche (3) eine vom Bund (2) axial beabstandete, mit wenigstens einer axialen Öffnung (4) versehene vorstehende Strömungsleiteinrichtung (5) aufweist.

## Beschreibung

Die Erfindung betrifft eine Zylinderlaufbuchse für eine Brennkraftmaschine mit den Merkmalen des Oberbegriffs von Anspruch 1 sowie eine Anordnung aus einer Zylinderlaufbuchse und einem Kurbelgehäuse.

Eine Zylinderlaufbuchse (engl. *cylinder liner)* ist ein Einsatz in ein Kurbelgehäuse eines Hubkolbenmotors (Brennkraftmaschine), welcher die Lauffläche für einen Kolben des Hubkolbenmotors bildet. Zylinderlaufbuchsen werden häufig eingesetzt, weil der Werkstoff, aus dem das Kurbelgehäuse hergestellt ist, nicht die tribologischen Anforderungen an eine Lauffläche für die Kolbenbewegung erfüllt. So ist es zweckdienlich, in eine Zylinderbohrung im Kurbelgehäuse eine Zylinderlaufbuchse anzuordnen. Es bestehen verschiedene Möglichkeiten, eine Zylinderlaufbuchse in das Kurbelgehäuse einzubauen. Bei PKW Motoren ist es bspw. üblich, eine Zylinderlaufbuchse in das Kurbelgehäuse einzugießen. Bei größeren Brennkraftmaschinen, bspw. stationäre Brennkraftmaschinen zur Stromerzeugung, werden Zylinderlaufbuchsen lösbar in eine Zylinderbohrung im Kurbelgehäuse eingesetzt.

Hinsichtlich der Art der Kühlung unterscheidet man "nasse" und "trockene" Zylinderlaufbuchsen. Nasse Zylinderlaufbuchsen werden von einem Kühlmittel der Brennkraftmaschine direkt umspült. Dazu ist ein Spaltraum zwischen dem Außenmantel der Zylinderlaufbuchse und der Wandung der Bohrung, in welche die Zylinderlaufbuchse eingesetzt wird, vorgesehen. Eine nasse Zylinderlaufbuchse wird daher mit einer Dichtung eingesetzt.

Trockene Zylinderlaufbuchsen, die in der Regel eine geringere Wandstärke als nasse Zylinderlaufbuchsen aufweisen, werden üblicherweise in eine Zylinderbohrung des Kurbelgehäuses eingeschrumpft. Die Wärmeabfuhr aus dem von der Zylinderlaufbuchse gebildeten Zylinder erfolgt in diesem Fall über Wärmeleitung in das Kurbelgehäuse.

Bei nassen Zylinderlaufbuchsen bestehen verschiedene Möglichkeiten des Einbaus in die Aufnahme im Kurbelgehäuse: sogenannte hängende Zylinderlaufbuchsen sind an einem den oberen Rand der Zylinderlaufbuchse bildenden Bund in das Kurbelgehäuse eingesetzt. Sogenannte Mid-Stop-Liner weisen eine Schulter an ihrem Außenumfang in der Mitte ihrer Längserstreckung auf, in der sie in einer entsprechenden Aufnahme der Bohrung des Kurbelgehäuses gelagert sind. Eine solche Konstruktion ist bspw. aus der US 4,244,330 bekannt. Bei Bottom-Stop Zylinderlaufbuchsen (engl. *bottom-stop-liner)* erfolgt die Lagerung der Zylinderlaufbuchse an deren unteren, d.h. dem Zylinderkopf angewandten Seite. Eine solche Konstruktion ist aus der US 4,385,595 bekannt. Schließlich sind auch Zylinderlaufbuchsen bekannt, die über einen Bund an ihrem oberen, d.h. dem Zylinderkopf zugewandten Ende, im Zylindergehäuse der Brennkraftmaschine in vertikaler Richtung fixiert sind. Eine solche Konstruktion ist bspw. aus der DE 1 957 811 bekannt.

In Betrieb sind Zylinderlaufbuchsen hohen thermischen und mechanischen Belastungen ausgesetzt.

Aufgabe der Erfindung ist es, eine Zylinderlaufbuchse bzw. eine Anordnung einer Zylinderlaufbuchse und einem Kurbelgehäuse mit verbesserter Kühlung anzugeben.

Diese Aufgaben werden gelöst durch eine Zylinderlaufbuchse nach Anspruch 1 bzw. eine Anordnung aus einer Zylinderlaufbuchse und einem Kurbelgehäuse nach Anspruch 10. Vorteilhafte Ausgestaltungen sind in den abhängigen Ansprüchen angegeben.

Indem die Zylinderlaufbuchse an ihrem Umfang eine vom Bund axial beabstandete, mit wenigstens einer axialen Öffnung versehene vorstehende Strömungsleiteinrichtung aufweist, ist die Kühlung der Zylinderlaufbuchse wesentlich verbessert. Unter axialer Öffnung ist zu verstehen, dass die Leiteinrichtung eine Unterbrechung aufweist, die eine Durchströmung der Leiteinrichtung in einer Richtung einer Mantellinie (d.h. parallel zur Längsachse) der Zylinderlaufbuchse erlaubt.

Bevorzugt ist vorgesehen, dass die vorstehende Strömungsleiteinrichtung in einer Umfangsrichtung der Mantelfläche der Zylinderlaufbuchse verläuft.

Die vorstehende Strömungsleiteinrichtung kann zum Beispiel als umlaufender Steg an der Zylinderlaufbuchse ausgebildet sein.

Die Strömungsleiteinrichtung verläuft vorzugsweise völlig in Umfangsrichtung. Es wäre auch vorstellbar, die Strömungsleiteinrichtung auch ähnlich einem schräg auf den Mantel der Zylinderlaufbuchse aufgesetzten Ring auszubilden. Dies ist fertigungstechnisch jedoch sehr aufwendig.

Vorzugsweise ist die Strömungsleiteinrichtung als Steg an der Mantelfläche der Zylinderlaufbuchse ausgebildet solchermaßen, dass der Steg sich kreisringförmig umfänglich aus der Mantelfläche der Zylinderlaufbuchse erstreckt.

Die vorstehende Strömungsleiteinrichtung kann als auf die Zylinderlaufbuchse nachträglich aufgebrachte Manschette oder Ring ausgebildet sein. Als Werkstoff dafür kommt Metall oder auch Kunststoff in Betracht.

Bevorzugt ist jedoch vorgesehen, dass die vorstehende Strömungsleiteinrichtung integraler Bestandteil der Zylinderlaufbuchse ist. So kann die Strömungsleiteinrichtung über eine Dreh-Operation gefertigt werden.

Alternativ kann die vorstehende Strömungsleiteinrichtung als Bestandteil des Kurbelgehäuses ausgebildet sein. In diesem Fall ragt die Strömungsleiteinrichtung in Form eines Steges oder dergleichen von einer Wandung der Zylinderbohrung in Richtung der Mantelfläche der Zylinderlaufbuchse.

Bevorzugt ist vorgesehen, dass bei Vorliegen genau einer axialen Öffnung diese maximal 25% des Umfangs der vorstehenden Strömungsleiteinrichtung beträgt.

In anderen Worten erstreckt sich die Öffnung (bei Vorliegen der Strömungsleiteinrichtung in Umfangsrichtung) über maximal 90°.

Die Anzahl der Öffnungen richtet sich nach den Gegebenheiten im Einbau der Zylinderlaufbuchse in ein Kurbelgehäuse. Insbesondere wird die Form und Anzahl der in einen Spaltraum zwischen Zylinderlaufbuchse und Kurbelgehäuse mündenden Kühlkanäle berücksichtigt.

Es ist vorgesehen, dass bei Vorliegen von zwei Öffnungen diese jeweils maximal 20% des Umfangs der vorstehenden Strömungsleiteinrichtung betragen.

Bei Vorliegen von drei Öffnungen ist vorgesehen, dass diese jeweils maximal 18% des Umfangs der vorstehenden Strömungsleiteinrichtung betragen.

Es ist vorgesehen, dass bei Vorliegen von vier Öffnungen diese jeweils maximal 15% des Umfangs der vorstehenden Strömungsleiteinrichtung betragen.

Bevorzugt ist vorgesehen, dass die Summe aller axialen Öffnungen maximal 25%, vorzugsweise maximal 10% des Umfangs der vorstehenden Strömungsleiteinrichtung beträgt.

Es kann vorgesehen sein, dass die vorstehende Strömungsleiteinrichtung, bezogen auf die Längserstreckung der Zylinderlaufbuchse in der Mitte der Zylinderlaufbuchse, vorzugsweise in dem zum Bund weisenden oberen Drittel der Zylinderlaufbuchse angeordnet ist. Damit wird erreicht, dass die Beeinflussung der Strömung eines Kühlmediums durch die Strömungsleiteinrichtung in hohem Maß aufrecht ist, wenn die Strömung auf thermisch höher belastete Zonen trifft - und diese sind in der Regel auf der Höhe des Bundes einer Zylinderlaufbuchse.

Bevorzugt ist vorgesehen, dass die Zylinderlaufbuchse als hängende, nasse Zylinderlaufbuchse ausgebildet ist.

Die Erfindung eignet sich insbesondere für die Anwendung auf dieses Konstruktionsprinzip.

Schutz wird auch begehrt für eine Anordnung aus einer Zylinderlaufbuchse und einem Kurbelgehäuse.

Bevorzugt ist vorgesehen, dass die Anordnung zusätzlich einen Zylinderkopf umfasst. Bevorzugt kann vorgesehen sein, dass die Zylinderlaufbuchse über ihren Bund im Kurbelgehäuse gelagert ist. Weiters kann vorgesehen sein, dass zwischen wenigstens einem Teil der Mantelfläche der Zylinderlaufbuchse und einer Wandung einer Aufnahme der Zylinderlaufbuchse im Kurbelgehäuse eine von einem Kühlmedium durchströmbare Kavität ausgebildet ist.

Bevorzugt ist vorgesehen, dass die Zylinderlaufbuchse in einer Zylinderbohrung unter Ausbildung einer Kavität zwischen einer Mantelfläche der Zylinderlaufbuchse und einer Wandung der Zylinderbohrung angeordnet ist, wobei an axial entgegengesetzten Enden der Zylinderbohrung wenigstens ein Einströmkanal und wenigstens ein Ausströmkanal für ein Kühlmedium angeordnet sind, wobei in der Kavität axial zwischen dem wenigstens einen Einströmkanal und dem wenigstens einen Ausströmkanal eine Strömungsleiteinrichtung vorgesehen ist.

Damit wird die Einbaulage einer Zylinderlaufbuchse in einer Zylinderbohrung umrissen. Die Kühlung der Zylinderlaufbuchse erfolgt durch Umströmung mit einem Kühlmedium, welches entgegengesetzten Enden der Zylinderbohrung ein- bzw. abströmt.

Bevorzugt ist vorgesehen, dass die Zahl der axialen Öffnungen in der Strömungsleiteinrichtung der der Zahl von Ausströmkanälen entspricht. In der Praxis werden also die Öffnungen und die Zahl der Ausströmkanäle aufeinander abgestimmt.

Es kann vorgesehen sein, dass die Strömungsleiteinrichtung an der Wandung der Zylinderbohrung angeordnet ist. Wie weiter oben bereits erwähnt, kann die vorstehende Strömungsleiteinrichtung als Bestandteil des Kurbelgehäuses ausgebildet sein. In diesem Fall ragt die Strömungsleiteinrichtung in Form eines Steges oder dergleichen von einer Wandung der Zylinderbohrung in Richtung der Mantelfläche der Zylinderlaufbuchse. Diese Variante ist fertigungstechnisch aufwendiger als das Ausbilden der Strömungsleiteinrichtung an der Zylinderlaufbuchse.

Umfasst die Anordnung einen Zylinderkopf, ist bevorzugt vorgesehen, dass die Zylinderlaufbuchse so im Kurbelgehäuse ausgerichtet ist, dass wenigstens eine axiale Öffnung der vorstehenden Strömungsleiteinrichtung hinsichtlich ihrer Winkellage mit der Position wenigstens eines im Zylinderkopf angeordneten Auslassventils korrespondiert.

Der Bereich des Auslassventils bzw. der Auslassventile (wenn mehrere Auslassventile pro Zylinder vorgesehen sind) ist thermisch hochbelastet.

Durch die bevorzugte Anordnung wird erreicht, dass in jenen Bereichen eine verstärkte Kühlung stattfindet. Dazu ist ein lagerichtiger Einbau der Zylinderlaufbuchse bezüglich ihrer Winkellage erforderlich.

Bevorzugt ist vorgesehen, dass das Kurbelgehäuse wenigstens einen Zufuhrkanal und wenigstens einen Abfuhrkanal zur Führung eines Kühlmediums aufweist, welche in eine zwischen einer Wandung einer Aufnahme der Zylinderlaufbuchse im Kurbelgehäuse und wenigstens einem Teil der Mantelfläche der Zylinderlaufbuchse gebildete Kavität münden.

Bevorzugt ist vorgesehen, dass die Zylinderlaufbuchse so im Kurbelgehäuse ausgerichtet ist, dass die wenigstens eine axiale Öffnung der vorstehenden Strömungsleiteinrichtung hinsichtlich ihrer Winkellage mit einem Zufuhrkanal korrespondiert. Dazu ist ein lagerichtiger Einbau der Zylinderlaufbuchse bezüglich ihrer Winkellage erforderlich.

Bevorzugt ist vorgesehen, dass zwischen der vorstehenden Strömungsleiteinrichtung und der Wandung der Aufnahme der Zylinderlaufbuchse im Kurbelgehäuse ein Abstand vorhanden ist.

Mit Abstand ist hier gemeint, dass die Strömungsleiteinrichtung in radialer Richtung gegenüber der Wandung der Aufnahme der Zylinderlaufbuchse im Kurbelgehäuse mit Spiel gefertigt ist. Die Leiteinrichtung dient nicht als mechanische Führung oder Abstützung der Zylinderlaufbuchse im Kurbelgehäuse, sondern ist als Strömungsleiteinrichtung ausgebildet.

Der Abstand kann zum Beispiel als Spiel von 0,5 mm bemessen sein.

Auch bei für einen Einbau günstigen Abstand der Strömungsleiteinrichtung von der Wandung der Aufnahme der Zylinderlaufbuchse im Kurbelgehäuse ist gewährleistet, dass der größte Teil der Strömung des Kühlmediums durch die Öffnung bzw. die Öffnungen in der Strömungsleiteinrichtung erfolgt.

Durch die Erfindung werden also sogenannte Stagnationszonen im den die Zylinderlaufbuchse umgebenden Wassermantel vermieden. In Stagnationszonen ist die Strömungsgeschwindigkeit eines Kühlmediums gering, wodurch ein nur schlechter Wärmeübergang zwischen dem Kühlmedium und den an die Stagnationszone angrenzenden Bauteile stattfindet.

Durch die Erfindung gelingt es, das Kühlmedium gezielt zu den thermisch am höchsten beanspruchten Zonen um die Zylinderlaufbuchse zu lenken.

Die Erfindung wird im Folgenden durch die Figuren näher erläutert. Dabei zeigt:
- Fig. 1: eine Zylinderlaufbuchse in einem ersten Ausführungsbeispiel,
- Fig. 2: die Zylinderlaufbuchse aus Fig. 1 in einem Aufriss, einem Grundriss und in einem Querschnitt
- Fig. 3: eine Anordnung einer Zylinderlaufbuchse und einem Kurbelgehäuse,
- Fig. 4: eine Draufsicht eines Kurbelgehäuses,
- Fig. 5: eine einer Zylinderlaufbuchse und einem Kurbelgehäuse in einem weiteren Ausführungsbeispiel
- Fig. 6: eine schematische Darstellung einer Zylinderlaufbuchse in einem weiteren Ausführungsbeispiel
- Fig. 7a: eine Draufsicht eines Kurbelgehäuses
- Fig. 7b: ein Diagramm von Temperaturen an einer Zylinderlaufbuchse im Bereich des Bundes

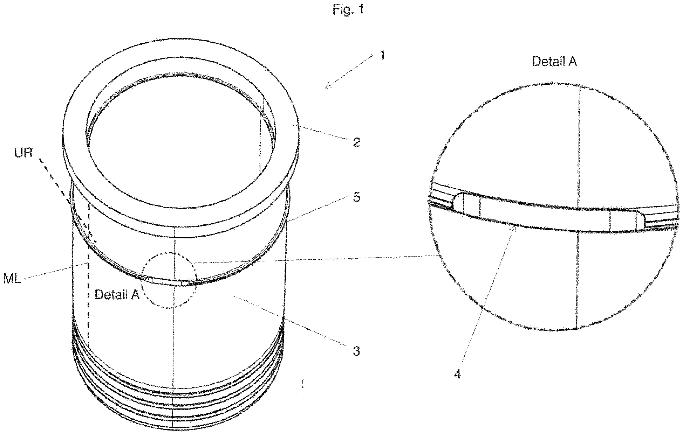

Figur 1 zeigt eine erfindungsgemäße Zylinderlaufbuchse 1 in einem ersten Ausführungsbeispiel.

Die Zylinderlaufbuchse 1 weist an der Mantelfläche 3 eine vorstehende Strömungsleiteinrichtung 5 in Form eines umlaufenden Steges auf. Die vorstehende Strömungsleiteinrichtung 5 zeigt eine Öffnung 4 in Form einer Unterbrechung des die Strömungsleiteinrichtung 5 bildenden Steges. Die Öffnung 4 ist auf der rechten Seite der Figur 1 als vergrößertes Detail nochmals dargestellt. In der Darstellung ist nur eine, dem Betrachter zugewandte Öffnung 4 zu erkennen. Die Zylinderlaufbuchse 1 kann natürlich mehrere Öffnungen 4 aufweisen, im vorliegenden Ausführungsbeispiel bestehen zwei Öffnungen 4.

Im Bereich der Öffnung 4 ist in diesem Ausführungsbeispiel die Strömungsleiteinrichtung 5 bis zur Mantelfläche 3 der Zylinderlaufbuchse 1 entfernt. Es ist natürlich auch vorstellbar, die Öffnung so auszubilden, dass noch Teile der Strömungsleiteinrichtung 5 aus der Mantelfläche 3 herausragen. Ebenso denkbar ist es, die Öffnung(en) als Bohrungen oder Durchbrüche in der Strömungsleiteinrichtung 5 auszubilden.

Die Zylinderlaufbuchse 1 weist einen Bund 2 auf, über welchen die Zylinderlaufbuchse 1 beim Einsetzen in einer Zylinderbohrung eines Kurbelgehäuses einer Brennkraftmaschine (hier nicht dargestellt) gelagert werden kann.

Obschon aus der darstellenden Geometrie bekannt, sind die eine Mantellinie ML und eine Umfangsrichtung UR in der Figur 1 eingetragen.

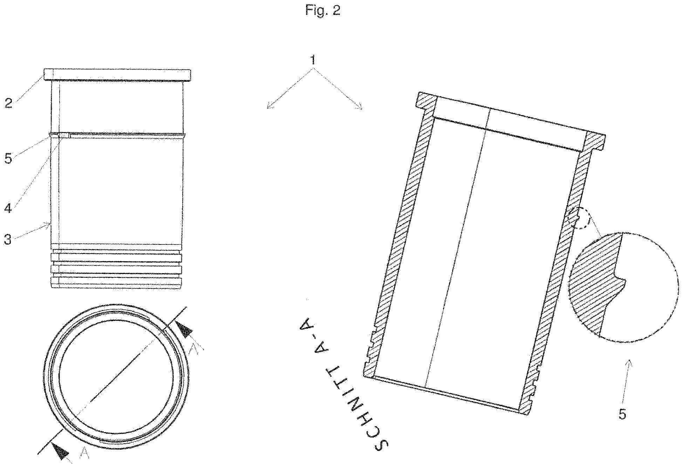

Figur 2 zeigt die Zylinderlaufbuchse 1 von Figur 1 in einem Aufriss, einem Grundriss und in einem Querschnitt.

Die im Grundriss eingezeichnete Schnittführung A-A ist so gelegt, dass der Schnitt auf der linken Seite durch die vorstehende Strömungsleiteinrichtung 5 und rechts durch eine Öffnung 4 verläuft. Da der Schnitt A-A entlang eines Durchmessers der Zylinderlaufbuchse 1 erfolgt, ist daraus auch erkennbar, dass die Öffnungen 4 in diesem Ausführungsbeispiel nicht genau gegenüber am Umfang angeordnet sind.

Auf der rechten Bildhälfte von Figur 2 erkennbar ist der sich durch Schnitt A-A ergebende Querschnitt der Zylinderlaufbuchse 1. Die Strömungsleiteinrichtung 5 ist als Detail nochmals hervorgehoben.

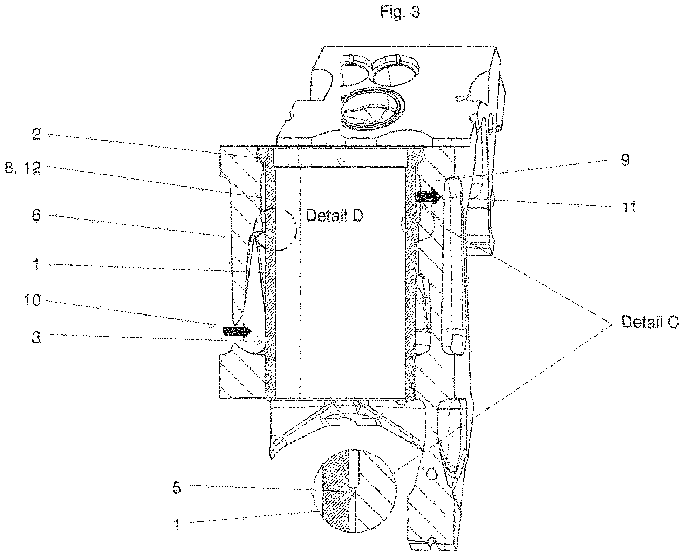

Figur 3 zeigt die Anordnung einer erfindungsgemäßen Zylinderlaufbuchse 1 in einem Kurbelgehäuse 6. Die Zylinderlaufbuchse 1 ist in eine Aufnahme (die Zylinderbohrung 8) in das Kurbelgehäuse 6 eingesetzt und liegt mit ihrem Bund 2 auf einer entsprechend ausgebildeten Schulter im Kurbelgehäuse 6 auf.

Zwischen der Mantelfläche 3 der Zylinderlaufbuchse 1 und einer Wandung 12 der Zylinderbohrung 8 im Kurbelgehäuse 6 ist eine von einem Kühlmedium M durchströmbare Kavität 9 ausgebildet.

In dieser als Wassermantel bezeichnete Kavität 9 strömt ein Kühlmedium M vorzugsweise so, dass die Strömungsrichtung von unten (also der dem Zylinderkopf 7abgewandten Seite) nach oben (also der dem Zylinderkopf 7 zugewandten Seite) erfolgt.

Im Detail C ist gezeigt, wie die Strömungsleiteinrichtung 5 an einer Stelle ihres Umfanges die Wandung 12 der Zylinderbohrung 8 im Kurbelgehäuse berührt. An dieser Stelle verhindert also die Strömungsleiteinrichtung 5 ein Abströmen eines Kühlmediums M in der Kavität 9 von einem Zufuhrkanal 10 in Richtung eines Abfuhrkanals 11. Vielmehr wird die Strömung so gelenkt, dass der größte Teil der Strömung durch die Öffnung(en) 4 tritt.

Auch bei für einen Einbau günstigen Abstand der Strömungsleiteinrichtung 5 von der Wandung 12 der Zylinderbohrung 8 der Zylinderlaufbuchse 1 im Kurbelgehäuse 6 ist gewährleistet, dass der größte Teil der Strömung des Kühlmediums M durch die Öffnung 4 bzw. die Öffnungen 4 in der Strömungsleiteinrichtung 5 erfolgt.

Durch Blockpfeile dargestellt ist die Strömungsrichtung des Kühlmediums M, das heißt einströmend in Zufuhrkanal 10 und abströmend aus Abfuhrkanal 11.

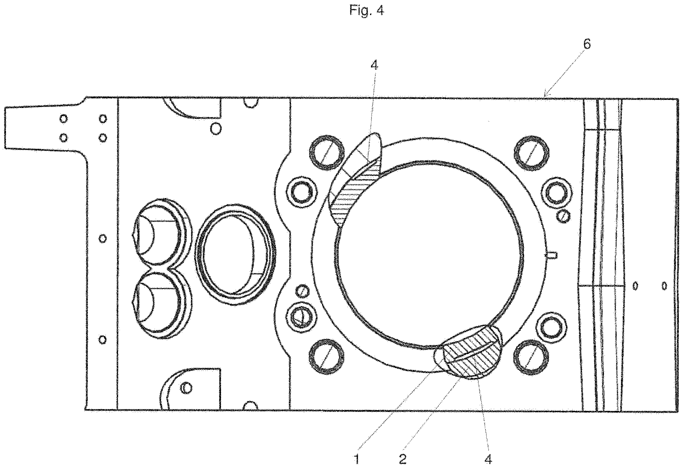

Figur 4 zeigt ein Kurbelgehäuse 6 in einer Draufsicht. Die Schnittführung ist dabei so gelegt, dass die Öffnungen 4 erkennbar sind.

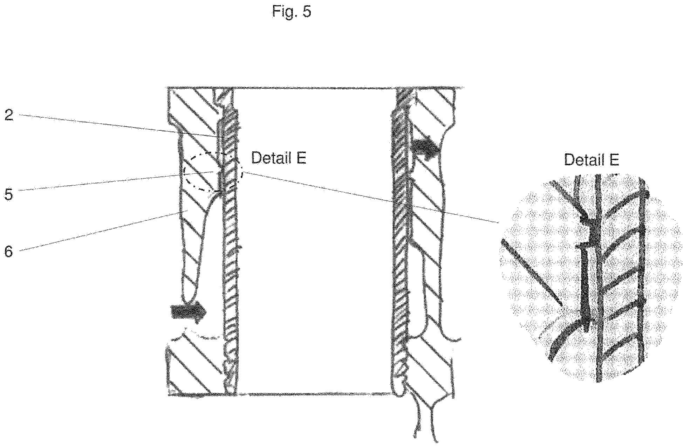

Figur 5 zeigt ein Ausführungsbeispiel, in welchem die Strömungsleiteinrichtung 5 als Teil des Kurbelgehäuses 6 ausgebildet ist, wie im Detail E hervorgehoben. Die Zylinderlaufbuchse 1 weist in diesem Beispiel also keine Strömungsleiteinrichtung 5 auf.

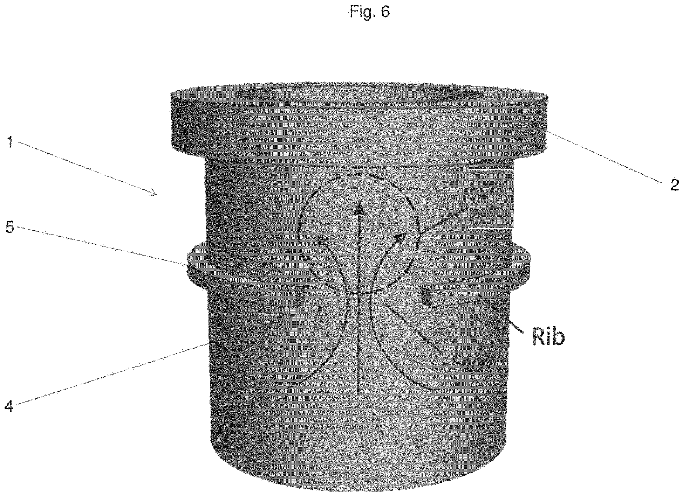

Figur 6 zeigt eine vereinfachte perspektivische Ansicht einer Zylinderlaufbuchse 1 mit einer vorstehende Strömungsleiteinrichtung 5 und einer Öffnung 4.

Zur Illustration der Wirkung der Erfindung sind Strömungslinien des Kühlmediums M eingetragen, wie sie sich im eingebauten Zustand der Zylinderlaufbuchse 1 in ein nicht dargestelltes Kurbelgehäuse 6 zwischen der Wandung der Zylinderbohrung 8 und der Zylinderlaufbuchse ergeben. Es kommt deutlich zum Ausdruck, dass über die Strömungsleiteinrichtung 5 zusammen mit Öffnungen 4 die Strömung des Kühlmediums M wirkungsvoll gelenkt werden kann.

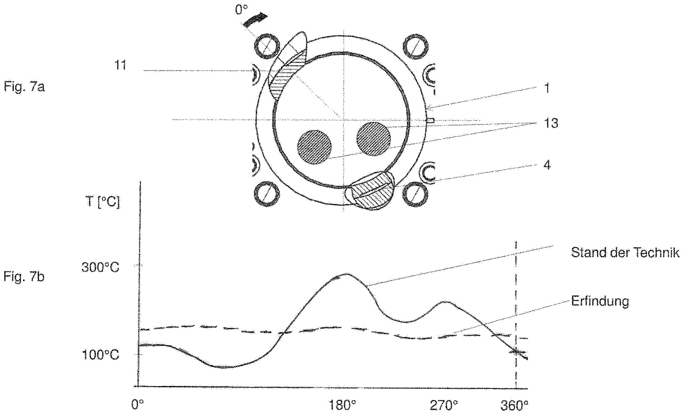

Figur 7a zeigt einen Schnitt bzw. eine Draufsicht einer Anordnung aus Zylinderlaufbuchse 1, Kurbelgehäuse 6, Zylinderkopf 7 und Auslassventilen 13.

Eine Schnittebene ist an der Oberkante von Bund 2 normal zur Längsachse der Zylinderlaufbuchse 1 gewählt. Weitere Schnitte sind so gewählt, dass die Öffnungen 4 in der Strömungsleiteinrichtung erkennbar sind, siehe dazu auch Figur 4.

Zusätzlich zu dem anhand Figur 4 Erklärtem sind hier zusätzlich zwei Auslassventile 13 eingetragen. Die Darstellung ist kein Schnitt im technischen Sinne sondern eine vereinfachte Darstellung zur Illustration der Gegebenheiten.

Figur 7b zeigt illustrativ Temperaturverläufe entlang des Bundes 2 im Vergleich zwischen Stand der Technik zur Erfindung.

Die Temperatur ist über den Winkel aufgetragen, wobei 360° dem Vollkreis entsprechen. Der Startpunkt der gedachten Messung bei 0° ist in Figur 7a eingezeichnet. Die Abszisse in Figur 7b ist also die Abwicklung einer gedachten Messlinie im Bereich des Bundes 2.

Betrachtet man nun den Temperaturverlauf bei einer Anordnung einer Zylinderlaufbuchse und einem Kurbelgehäuse nach Stand der Technik, so ergibt sich die durchgezogene, als "Stand der Technik" bezeichnete Kurve. Man erkennt, dass im Bereich der Auslassventile 13 (ca. bei 180° und 270°) die Temperatur deutliche Überhöhungen (peaks) aufweist.

Im Bereich des Ausströmkanals 11 ist die Temperatur am geringsten.

Betrachtet man den Temperaturverlauf bei Einsatz der Erfindung, ergibt sich die strichlierte, als "Erfindung" bezeichnete Kurve. Man erkennt, dass sich durch die Erfindung eine wesentlich gleichmäßigere Temperaturverteilung über einen Umfang des Bundes 2 ergibt.

Die angegebenen Zahlenwerte für die Temperatur sind illustrativ und können sich von Motorenmodell zu Motorenmodell deutlich unterscheiden.

### Liste der verwendeten Bezugszeichen:

- 1: Zylinderlaufbuchse
- 2: Bund
- 3: Mantelfläche der Zylinderlaufbuchse
- 4: Öffnung
- 5: Vorstehende Strömungsleiteinrichtung
- 6: Kurbelgehäuse
- 7: Zylinderkopf
- 8: Zylinderbohrung
- 9: Kavität
- 10: Einströmkanal
- 11: Ausströmkanal
- 12: Wandung der Zylinderbohrung 8
- 13: Auslassventil
- M: Kühlmedium
- UR: Umfangsrichtung
- ML: Mantellinie

## Patentansprüche

1. Zylinderlaufbuchse (1) für eine Brennkraftmaschine , mit einem Bund (2), **dadurch gekennzeichnet, dass** die Zylinderlaufbuchse (1) an ihrer Mantelfläche (3) eine vom Bund (2) axial beabstandete, mit wenigstens einer axialen Öffnung (4) versehene vorstehende Strömungsleiteinrichtung (5) aufweist.

2. Zylinderlaufbuchse (1) nach Anspruch 1, wobei die vorstehende Strömungsleiteinrichtung (5) in einer Umfangsrichtung der Mantelfläche (3) der Zylinderlaufbuchse (1) verläuft.

3. Zylinderlaufbuchse (1) nach Anspruch 1 oder 2, **dadurch gekennzeichnet, dass** bei Vorliegen genau einer axialen Öffnung (4) diese maximal 25% des Umfangs der vorstehenden Strömungsleiteinrichtung (5) beträgt.

4. Zylinderlaufbuchse (1) nach Anspruch 1 oder 2, **dadurch gekennzeichnet, dass** bei Vorliegen von zwei Öffnungen (4) diese jeweils maximal 20% des Umfangs der vorstehenden Strömungsleiteinrichtung (5) betragen.

5. Zylinderlaufbuchse (1) nach wenigstens einem der Ansprüche 1 bis 2, **dadurch gekennzeichnet, dass** bei Vorliegen von drei Öffnungen (4) diese jeweils maximal 18% des Umfangs der vorstehenden Strömungsleiteinrichtung (5) betragen.

6. Zylinderlaufbuchse (1) nach wenigstens einem der Ansprüche 1 bis 2, **dadurch gekennzeichnet, dass** bei Vorliegen von vier Öffnungen (4) diese jeweils maximal 15% des Umfangs der vorstehenden Strömungsleiteinrichtung (5) betragen.

7. Zylinderlaufbuchse (1) nach wenigstens einem der vorstehenden Ansprüche, wobei die Summe aller axialen Öffnungen (4) maximal 25% , vorzugsweise maximal 10% des Umfangs der vorstehenden Strömungsleiteinrichtung (5) beträgt

8. Zylinderlaufbuchse (1) nach wenigstens einem der vorangegangenen Ansprüche, wobei die vorstehende Strömungsleiteinrichtung (5), bezogen auf die Längserstreckung der Zylinderlaufbuchse (1) in der Mitte der Zylinderlaufbuchse (1), vorzugsweise in dem zum Bund (2) weisenden oberen Drittel der Zylinderlaufbuchse (1) angeordnet ist.

9. Zylinderlaufbuchse (1) nach wenigstens einem der vorangegangenen Ansprüche, wobei die Zylinderlaufbuchse (1) als hängende nasse Zylinderlaufbuchse (1) ausgebildet ist.

10. Anordnung aus einer Zylinderlaufbuchse (1) insbesondere nach wenigstens einem der Ansprüche 1 bis 9 und einem Kurbelgehäuse (6) wobei die Zylinderlaufbuchse (1) in einer Zylinderbohrung (8) unter Ausbildung einer Kavität (9) zwischen einer Mantelfläche der Zylinderlaufbuchse (1) und einer Wandung der Zylinderbohrung (8) angeordnet ist, wobei an axial entgegengesetzten Enden der Zylinderbohrung (8) wenigstens ein Einströmkanal (10) und wenigstens ein Ausströmkanal (11) für ein Kühlmedium (M) angeordnet sind, **dadurch gekennzeichnet, dass** in der Kavität (9) axial zwischen dem wenigstens einen Einströmkanal (10) und dem wenigstens einen Ausströmkanal (11) eine Strömungsleiteinrichtung (5) vorgesehen ist.

11. Anordnung nach Anspruch 10, wobei die Strömungsleiteinrichtung (5) an der Wandung der Zylinderbohrung (8) angeordnet ist.

12. Anordnung nach Anspruch 10 oder 11, wobei die Zahl der axialen Öffnungen (4) in der Strömungsleiteinrichtung (5) der Zahl von Ausströmkanälen (11) entspricht.

13. Anordnung nach wenigstens einem der vorangegangenen Ansprüche, wobei die Anordnung zusätzlich einen Zylinderkopf (7) umfasst.

14. Anordnung nach wenigstens einem der vorangegangenen Ansprüche, wobei die Zylinderlaufbuchse (1) über ihren Bund (2) im Kurbelgehäuse (6) gelagert ist.

15. Anordnung nach wenigstens einem der vorangegangenen Ansprüche, wobei die Zylinderlaufbuchse (1) so im Kurbelgehäuse (6) ausgerichtet ist, dass wenigstens eine axiale Öffnung (4) der vorstehenden Strömungsleiteinrichtung (5) hinsichtlich ihrer Winkellage mit der Position wenigstens eines im Zylinderkopf (7) angeordneten Auslassventils (13) korrespondiert.

16. Anordnung nach Anspruch 15, wobei die Zylinderlaufbuchse (1) so im Kurbelgehäuse (6) ausgerichtet ist, dass die wenigstens eine axiale Öffnung (4) der vorstehenden Strömungsleiteinrichtung (5) hinsichtlich ihrer Winkellage mit einem Zufuhrkanal (10) korrespondiert.
